# EUROPÄISCHE PATENTSCHRIFT

(11) **EP 0 736 752 B1**
(45) Veröffentlichungstag und Bekanntmachung des Hinweises auf die Patenterteilung: **25.07.2001**
(21) Anmeldenummer: 95104951.9
(22) Anmeldetag: 03.04.1995
(51) Int. Cl.: G01G 1/00, G01G 23/01, G01G 19/08

(54) **Wägeverfahren und Hubfahrzeug zur Durchführung des Verfahrens**
Method of weighing and lifting vehicle for performing the method
Méthode de pesage et véhicule élévateur pour la mise en oeuvre de ce procédé

(43) Veröffentlichungstag der Anmeldung: 09.10.1996
(73) Patentinhaber: ASCOREL CONTROLE ET REGULATION ELECTRONIQUE, F-38780 Pont-Eveque-France (FR)
(72) Erfinder: Silvy-Leligois, Bernard, F-38780 Estrablin (FR); Giroud, Jacques, F-38200 Vienne (FR)
(74) Vertreter: Geitz, Heinrich, Dr.-Ing.

(56) Entgegenhaltungen:
- EP-A- 0 398 809
- EP-A- 0 496 166
- US-A- 5 105 896

## Beschreibung

Die Erfindung betrifft ein Wägeverfahren zur Bestimmung der jeweiligen Förderlast eines Hubfahrzeuges und ein Hubfahrzeug zur Durchführung des Wägeverfahrens. Aus der EP 0 496 166 A2 ist ein Müllfahrzeug mit einem Frontlader bekannt. Bei diesem Fahrzeug werden Messungen der veränderlichen Winkel und Drehelemente sowie der darauf wirkenden Lasten mit Hilfe hydraulischer Zylinder aufgenommen. Darüber hinaus werden Messungen der geometrischen Konstanten der Vorrichtung aufgenommen. Die gemessenen Daten werden einer Rechnereinheit zugeleitet werden. Die Rechnereinheit ermittelt anhand einer vorgefertigten Programmstruktur den Abstand zwischen einem Fußpunkt und den zu leerenden Containern. Dieser Abstand sowie die mit Hilfe der hydraulischen Zylinder gemessenen Kräfte werden herangezogen, um eine Last zu ermitteln. Es handelt sich dabei um ein statisches Lasterfassungsverfahren für Müllfahrzeuge. Der Einfluß dynamischer Größen, der im hier vorliegenden Falle bewegter Lasten nicht zu unterschätzen ist, geht nicht in die Messung ein. Die dynamischen Einflußgrößen führen somit zu einer Verfälschung des Meßergebnisses.

Darüber hinaus ist aus der DE-OS 29 10 057 ein Lastmomentbegrenzer für Krananlagen bekannt. Bei diesem Stand der Technik ist ein verschwenkbarer Kran mit Meßaufnehmern zur Aufnahme charakteristischer Ist-Betriebsgrößen versehen, die einem abgespeicherten Kennlinienfeld zugeordnet werden. Innerhalb einer Rechnereinheit wird anhand der gespeicherten Kennlinien zu jedem Last-Ist-Wert ein Last-Grenzwert bestimmt und bei Erreichen oder überschreiten des Grenzwertes ein Alarm ausgelöst. Der Kran wird somit anhand vorgegebener Grenzkurven auf ein kritisches Lastmoment hin überwacht.

Es handelt sich hierbei um ein dynamisches Überwachungsverfahren für Krananlagen, wobei es nicht darauf ankommt, welche Anteile des Lastmomentes auf die jeweilige Förderlast und welche Lastmomentanteile auf die Krananlege selbst zurückzuführen sind.

Der Erfindung liegt die Aufgabe zugrunde, ein Vägeverfahren und ein Hubfahrzeug zu schaffen, mit dem ohne Beeinträchtigung des Arbeitsablaufes eine präzise Bestimmung der jeweiligen Förderlast eines jeden einzelnen Fördervorgenges des Hubfahrzeuges möglich ist.

Die Lösung dieser Aufgabe gelingt mit einem dynamischen Wägeverfahren nach Anspruch 1. Bei diesem Verfahren wird individuell für jeden Fördergang die jeweils beförderte Last bestimmt. Hierzu werden der jeweiligen Förderbewegung und der jeweils anstehenden Gewichtskraft der Last entsprechende Meßwerte erfaßt und jeweils die statischen und dynamischen Einflußgrößen, die durch die Bewegung der Last und das Hubfahrzeug selbst verursacht werden, kompensiert. Gemäß dieser Lösung können vorgegebene Zuladungen und Fördermengen präzise eingehalten werden und eine genaue Abrechnung der beförderten Last nach Art und Menge der jeweiligen Ladung erfolgen.

Das Wägeverfahren ist ein lernfähiges System, das mittels eines einmaligen Parametrisierungs- und Kalibrierungsprozesses auf das jeweilige Hubfahrzeug abgestimmt wird. Demzufolge können auch bestehende Anlagen mit dem erfindungsgemäßen Verfahren nachgerüstet werden.

Zur Parametrisierung genügt es, die Geometrie der Anordnung einzugeben, wobei im Falle von teleskopierbaren Anordnungen auch Kennlinien oder Parameterfelder eingegeben werden können.

Zur späteren Kompensation der dynamischen Einflußgrößen des Hubfahrzeuges im Förderbetrieb müssen zunächst Leerfahrten des Hubfahrzeuges mit unterschiedlichen Rotationsgeschwindigkeiten und Schaufelarmen und/oder Auslegerstellungen in einer als Kalibrierung bezeichneten Phase durchgeführt werden. Diese Kalibrierung mit der entsprechenden Aufnahme und Aufbereitung der gewonnenen Meßwerte kann gemäß einer fest programmierten Kalibrierungsroutine automatisch durchgeführt werden.

Gemäß einer Weiterbildung nach Anspruch 4 erfolgt in jedem Meßpunkt eine Kompensation der gewonnenen Meßwerte derart, daß anschließend ein um die dynamischen und statischen Störeinflüsse, die durch das Hubfahrzeug selbst und die Bewegung der Last verursacht werden, bereinigter Lastmeßwert zur Verfügung steht. Eine weiter verbesserte Meßwertaufbereitung gelingt dadurch, daß nur die gemäß einem vorgebbaren Toleranzband gefilterten Meßwerte zur Auswertung gelangen. Hierdurch wird der Einfluß von Ausreißern und statistischen Fehlern wirksam reduziert.

Dadurch, daß die Messung inkremental durch die Aufnahme einer von der Länge des zeitlichen Meßintervalls abhängigen Anzahl von Meßpunkten erfolgt, ist sichergestellt, daß der am Ende der Auswertung ermittelte Lastwert das Ergebnis einer statistischen Auswertung von mehreren Meßwerten ist. Hierdurch ist die Güte des ermittelten Lastwertes weiter erhöht.

Nach Anspruch 6 wird die Gewichtskraft der Förderlast nicht durch eine Messung im Aufhängepunkt, sondern mittels einer Druckmessung im Druckzylinder des Auslegers oder Schaufelarms bestimmt. Hierdurch wirkt niemals die gesamte Gewichtskraft der Förderlast auf den Meßwertaufnehmer. Die Lebensdauer der Sensorik ist hierdurch verlängert.

Die Auswertung der für verschiedene Meßpunkte ermittelten Lastwerte erfolgt nach Anspruch 7 durch Integration über das jeweils betrachtete zeitliche Meßintervall und eine anschließende Mittelwertbildung.

Die der Erfindung zugrundeliegende Aufgabe wird auch mit einem Hubfahrzeug zur Durchführung des Wägefahrzeugs gelöst. Es handelt sich dabei insbesondere um einen Großbagger mit einem rotierbaren Oberteil und einem Ausleger mit einer beweglichen Schaufel oder einem Ausleger mit angelenktem Schaufelarm mit einer beweglichen Schaufel und wenigstens zwei jeweils in den Umlenkpunkten des Auslegers und/oder des Schaufelarms angeordneten Winkelgebern und wenigstens einem an einem Druckzylinder des Auslegers oder Schaufelarms angeordneten Druckmesser, wobei die Meßwertaufnehmer mit einer Steuereinrichtung verbunden sind.

Somit kann bei diesem Hubfahrzeug die individuelle Förderlast eines jeden Fördervorganges dynamisch, das heißt ohne Unterbrechung des Fördervorganges, präzise bestimmt werden. Die genannten Meßaufnehmer und die benötigte Steuereinrichtung können auch nachträglich an einem herkömlichen Hubfahrzeug nachgerüstet werden. Die Winkelgeber erfassen die jeweilige Betriebsstellung des Hubfahrzeuges und die Druckmesser eine der jeweiligen Förderlast entsprechende Meßgröße. Die jeweils erhaltenen Meßwerte werden in der Steuereinheit durch die Kompensation der Eigenanteile des Hubfahrzeuges und der dynamischen Einflußgrößen, wie Reibungs- oder Zentrifugalkräfte, bereinigt. Da das beschriebene System zur Durchführung des Wägeverfahrens ein lernfähiges System ist, können unterschiedlichste Hubfahrzeuge entsprechend nachgerüstet werden.

Dadurch, daß auf dem Oberteil des Hubfahrzeuges ein mit der Steuereinheit in Signalverbindung stehender Beschleunigungsmesser zur Erfassung der momentanen Rotationsgeschwindigkeit angeordnet ist, kann zusätzlich zu der momentanen Bewegungsstellung die jeweilige Rotationsgeschwindigkeit des Oberteils und damit die Größe der jeweils wirkenden Zentrifugalkraft für jeden Meßpunkt bestimmt werden. Somit ist auch im Falle einer Handsteuerung eine stets korrekte Erfassung der jeweiligen Förderlast möglich.

Um während der Kalibrierungsphase sowie während des gesamten Fördervorganges vergleichbare Meßergebnisse zu erhalten, werden alle Messungen und Datenaufnahmen mit vollständig angeklappter Schaufel durchgeführt. In vorteilhafter Weise ist hierzu unmittelbar an der Schaufel ein weiterer Winkelgeber zur Erfassung der Schaufelstellung angeordnet.

Während des mit dem Hubfahrzeug durchgeführten Förderbetriebes können sich unterschiedliche Neigungswinkel des rotierbaren 0berteils aufgrund der angehängten Färderlast oder der jeweiligen Arbeitsunterlage des Hubfahrzeuges ergeben. Hierdurch kann die Erfassung der jeweiligen Bewegungsstellung des Schaufelarms oder des Auslegers mit angelenktem Schaufelarm durch die Winkelaufnehmer mit Fehlern behaftet sein. Hierzu ist auf dem rotierbaren Oberteil eine Neigungswinkelerfassung vorgesehen, die mit der Steuereinrichtung des Hubfahrzeuges verbunden ist. Somit wird auch diese dynamische Einflußgröße bei der Berechnung der interessierenden Lestwerte kompensiert.

In vorteilhafter Weise kann der gesamte Förderbetrieb mittels einer unmittelbar am Bedienplatz des Hubfahrzeuges angeordneten Flüssigkeitskristallanzeige überwacht werden. Es kann sich hierbei um eine ständige oder umschaltbare Anzeige handeln. Hiermit wird zumindest die jeweilige Förderlast, die einem Kunden zugeordnete Förderlast oder die einer Ladung zuzurechnende Förderlast angezeigt. Zusätzlich können kumulierte Werte, wie zum Beispiel die Jahresförderleistung des Hubfahrzeuges, zur Anzeige gebracht werden.

In vorteilhafter Weiterbildung ist ein Drucker an die Steuereinrichtung des Hubfahrzeuges angeschlossen. Hierdurch können unmittelbar nach jedem Fördervorgang Quittungen oder Arbeitsbelege erstellt werden und es kann eine entsprechende Kennzeichnung der jeweiligen Ladungen erfolgen und direkt eine kundenorientierte bzw. ladungsbezogene Abrechnung erfolgen.

Die Erfindung wird anhand eines in der Zeichnung dargestellten Ausführungsbeispiels näher erläutert. In schematischer Darstellung zeigen:
- Fig. 1: einen Großbagger in einer Seitenansicht und
- Fig. 2: ein Blockschaltbild einer Sensorik.mit einer Steuereinrichtung des Großbaggers.

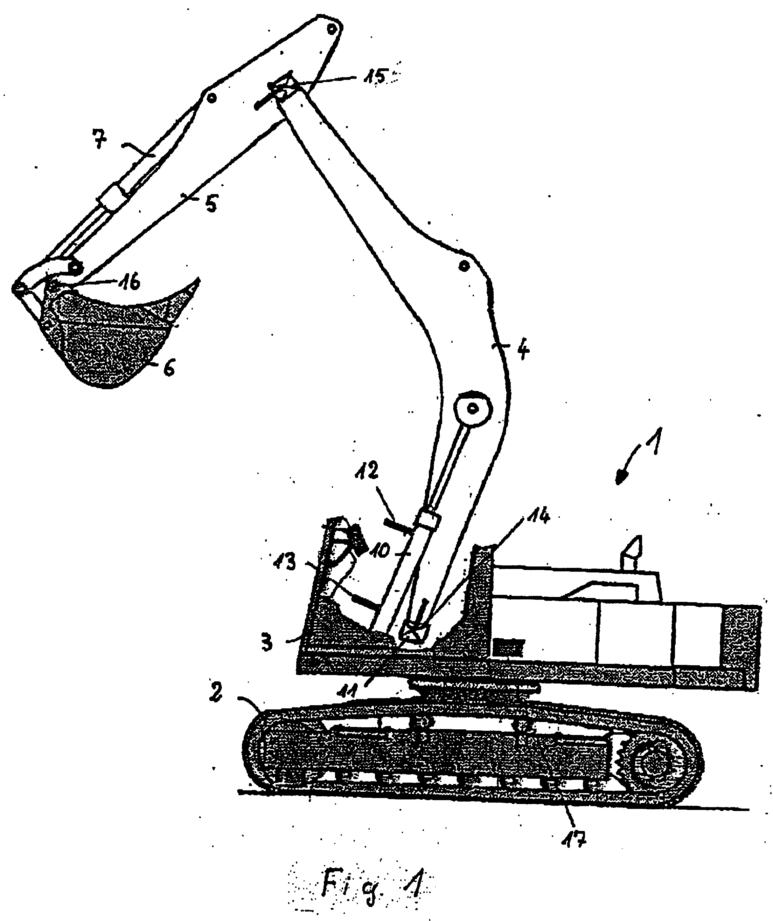

Der in Fig. 1 dargestellte Großbagger 1 umfaßt ein Raupenfahrwerk 2 mit einem rotierbaren Oberteil 3. Mit dem Oberteil 3 ist ein gekrümmter um eine horizontale Anlenkachse schwenkbarer Auslegerarm 4 verbunden. An den Auslegerarm 4 ist ein ebenfalls um eine weitere horizontale Anlenkachse schwenkbarer Schaufelarm 5 mit einer kippbaren Schaufel 6 an dem von dem Auslegerarm 4 entfernten Ende des Schaufelarms 5 angelenkt.

Ausleger- und Schaufelarm 4 und 5 sowie Schaufel 6 werden jeweils durch mindestens einen Druckzylinder 7, 10 verschwenkt, wobei in der Zeichnung nur der Druckzylinder 7 zur Bewegung der Schaufel 6 und der dem Auslegerarm 4 zugeordnete Druckzylinder 10 dargestellt sind. Tatsächlich wird der Auslegerarm 4 jedoch durch zwei beidseits am Fußpunkt 11 des Auslegerarms 4 angeordnete Druckzylinder 10 verschwenkt. Unmittelber an einem der beiden Druckzylinder 10 oder wahlweise auch an beiden Druckzylindern 10 ist ein Niedrig- und ein Hochdruckaufnehmer 12 und 13 angeordnet.

Ein Winkelgeber 14 ist am Fußpunkt 11 des Auslegerarms 4 und ein weiterer Winkelgeber 15 ist an der Anlenkachse des Schaufelarms 5 angeordnet. Zusätzlich befindet sich ein digitaler Kippwinkelgeber 16 an der Anlenkachse der Schaufel 6. Ein Beschleunigungsmesser 17 ist fest mit dem rotierbaren Oberteil 3 des Großbaggers 1 verbunden. Das Oberteil 3 weist darüber hinaus einen Neigungswinkelgeber 20 zur Bestimmung des jeweiligen Neigungswinkels des Oberteils 3 gegenüber der Horizontalen auf.

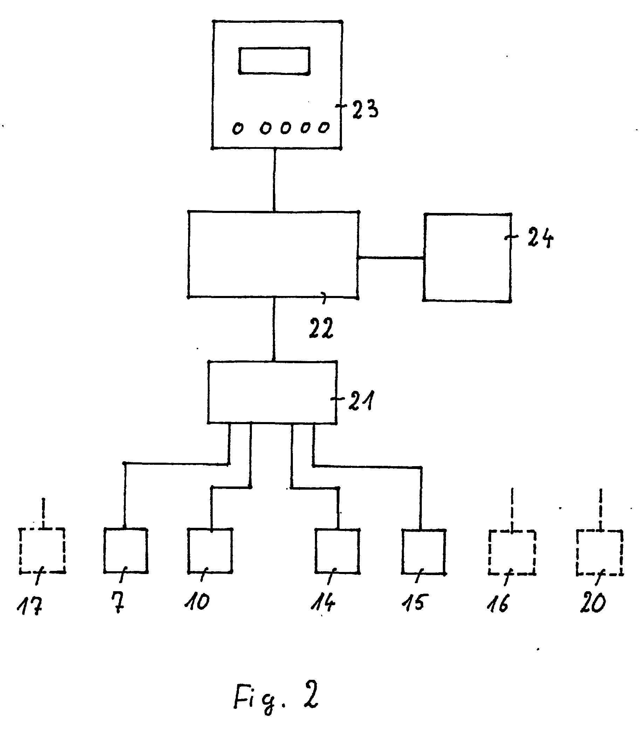

Alle Meßwertaufnehmer 12, 13, 14, 15, 16, 17 und 20 sind über Meßverstärker mit einer Schnittstelle 21, wie einer RS-232-Schnittstelle, einer in Fig. 2 dargestellten Steuereinrichtung 22 des Großbaggers 1 verbunden. Die Steuereinrichtung 22 besteht im wesentlichen aus einem Rechner mit einem 80C18B-Hikro-Cantroller und einer Speichereinheit. Die Steuereinrichtung 22 ist weiter an eine Anzeigeeinheit 23 angeschlossen, die in Form einer umschaltbaren Flüssigkeitskristallanzeige mit entsprechenden Bedienelementen ausgerüstet ist, und optional mit einem Drucker 24 zur Erstellung von Abrechnungsbelegen und Arbeitequittungen sowie anderer Belege der anhand der in der Steuereinrichtung 22 anfallenden Daten ermittelten Auswerteergebnisse versehen.

Nachstehend wird der Ablauf des Wägeverfahrens und die Funktion der für das Verfahren relevanten Elemente des Großbaggers 1 erläutert:
Vor der Inbetriebnahme eines zur Durchführung des Wägeverfahrens vorgesehenen Großbaggers 1 wird eine Parametrisierung der Steuereinrichtung 22 durchgeführt. In diesem Verfahrensschritt werden insbesondere die zur Bestimmung der Geometrie des Ausleger- und Schaufelarms 4 und 5 relevanten Daten erfaßt und in die Steuereinrichtung 22 eingegeben. Anhand dieser Daten wird in der Steuereinrichtung 22 ein Kennlinienfeld erstellt, des für jede mögliche Stellung des Ausleger- und Schaufelarms 4 und 5 den jeweils wirksamen Hebelarm, mit dem die Gewichtskraft der in der Schaufel 6 befindlichen Förderlast auf die an dem Druckzylinder 10 durchgeführte Druckmessung einwirkt, bestimmt.

In einem zweiten als Kalibrierung bezeichneten Verfahrensschritt wird ein weiteres Kennlinienfeld erstellt, bei dem die statischen und dynamischen Eigenanteile des Großbaggers 1, also beispielsweise das Eigengewicht der Schaufel 6 oder in der Anordnung wirkende Reibungskräfte auf die Druckmessung am Druckzylinder 10 erfaßt werden. Hierzu werden diverse Leerfahrten des Großbaggers 1, also dem Aufnahme-, Transport-, Entladevorgang entsprechende Bewegungen ohne eine aufgenommene Last bei unterschiedlichen Rotationsgeschwindigkeiten des Oberteils 3 durchgeführt. Im Anschluß steht für jede Ausleger- und Schaufelarmstellung und Rotationsgeschwindigkeit ein Eigenanteil des bewegten Großbaggers 1 an dem mit dem Druckaufnehmern 12 und 13 gemessenen Druck fest. Alle Messungen werden in der Phase der Kalibrierung aber auch später bei der Messung im Förderbetrieb mit vollständig angeklappter Schaufel 6 durchgeführt.

Anstelle der Kennlinienfelder kann auch ein umfassendes Formelwerk vorgesehen sein, das in den Phasen der Parametrisierung und Kalibrierung mit den benötigten Funktionsparametern gespeist wird, wobei anschließend die im Förderbetrieb aufgezeichneten Druckmeßwerte mittels dieses Formelwerks bereinigt werden.

In jedem Falle ist mit den ersten zwei Verfahreneabechnitten ein lernfähiges System zur Wägung der jeweiligen Förderlast beschrieben. Hierdurch ist eichergestellt, daß das in Rede stehende Wägeverfahren in Verbindung mit verschiedensten Hubfahrzeugen eingesetzt werden kann. Aufgrund der genannten Lernfähigkeit ist des beschriebene System auch zur Nachrüstung bestehender Förderanlagen geeignet.

Im Förderbetrieb erfolgt eine Überwachung des Fördervorgangs durch die Aufnahme von jeweils in Sekundenabständen erfolgenden Messungen. Jede der Messungen wird bei vollständig angeklappter Schaufel 6 durchgeführt, um jederzeit vergleichbare Meßergebnisse zu erhalten. Die jeweilige Schaufelstellung wird von dem digitalen Kippwinkelgeber 16 überwacht. Da zur Durchführung des erfindungsgemäßen Wägeverfahrens lediglich die Information benötigt wird, ob die Schaufel 6 vollständig angeklappt ist oder nicht, genügt es wenn der Kippwinkelgeber 16 ein binäres Signal an die Steuereinrichtung 22 übermittelt. In jedem Meßpunkt wird die jeweilige Stellung des Ausleger- und Schaufelarms 4 und 5 mittels der Winkeigeber 14 und 15, die momentane Rotationsgeschwindigkeit mittels eines Beschleunigungsmessers 17 und der im Druckzylinder 10 jeweils anstehende Druck mit den Druckaufnehmern 12 und 13 bestimmt. Die gewonnenen Meßwerte werden jeweils um den dynamischen und statischen Eigenanteil des Großbaggers 1 und um weitere dynamische Einflußgrößen wie einwirkende Zentrifugal- und Reibungskräfte bereinigt, so daß am Ende für jeden Meßpunkt ein bereinigter der jeweiligen Förderlast entsprechender Lastwert bestimmt ist.

Nach jeweils fünf Meßpunkten werden die in der oben beschriebenen Weise ermittelten Lastwerte über das betrachtete Zeitintervall integriert und es wird ein Mitteiwert gebildet, der noch genauer der aktuellen Förderlast des augenblicklich ablaufenden Fördervorganges entspricht. Die Güte dieses Meßwertes erhöht sich jeweils mit der Anzahl der betrachteten Fünfsekunden-Zeitintervalle, da im Falle mehrerer betrachteter Zeitintervalle eine erneute Mittelwertbildung mit den insgesamt gewonnenen Lastwerten durchgeführt wird.

Um die Qualität der durchgeführten Messung weiter zu erhöhen, können weitere Parameter, wie beispielsweise die jeweilige Neigung des Oberteils 3,Berücksichtigung finden. Darüber hinaus werden nur die Meßwerte einer Messung berücksichtigt, die innerhalb eines vorgebbaren Toleranzbandes liegen. Hierdurch ist sichergestellt, daß etwaige Ausreißer oder statistische Abweichungen ohne nennenswerten Einfluß auf die Güte dea zu bestimmenden Lastwertes bleiben. Mittels dieses Vorgehens wird auch der am Anfang eines jeden Fördervorganges infolge des Beharrungsmomentes der zu befördernden Last zu verzeichnete Laststoß ignoriert.

Sämtliche Meßergebnisse können an der Anzeigeeinheit 23 abgefragt und angezeigt sowie über den Drucker 24 ausgegeben werden. Mittels der beschriebenen präzisen Bestimmung der jeweiligen Förderlast kann eine genau vorgegebene Fördermenge exakt eingehalten werden. Hierdurch können vorgegebene Zuladungsmengen von Lastwagen oder Transportwaggons genau eingehalten werden und eine genaue kundenorientierte Abrechnung der Förderlast erfolgen. Mittels des angeschlossenen Druckers können direkt vor Ort entsprechende Belege für die aufgeladene Ladung erstellt werden. Die aufgelaufenen Meßergebnisse ermöglichen darüber hinaus die Erstellung weiterer Statistiken,wie eine nach Kunden, Art oder Zeit der jeweiligen Ladung geordnete Lastangabe. Darüber hinaus kann zur Überwachung von Wartungsintervallen stets die in einem Zeitintervall insgesamt erbrachte Förderleistung des Großbaggers 1 abgefragt werden.

## Patentansprüche

1. Wägeverfahren zur Bestimmung der jeweiligen Förderlast eines Hubfahrzeuges (1), insbesondere eines Großbaggers, mit einem Schaufelarm oder einem Ausleger mit einem angelenkten Schaufelarm (5), bei dem nacheinander folgende Schritte durchlaufen werden:
- eine Parametrierung, bei der die Geometrie des Hubfahrzeuges (1) derart erfaßt und abgespeichert wird, daß ein der Länge eines Hebelarmes der jeweils gegenüber einem zu bestimmenden Fußpunkt wirksam ist entsprechendes Kennlinienfeld bestimmt wird,
- Kalibrierung, bei der mittels entsprechender Leerfahrten der jeweilige Eigenanteil des Hubfahrzeugs (1) an der letztlich zu bestimmenden jeweiligen Förderlast erfaßt wird,
- eine Messung zumindest der vom Hubfahrzeug jeweils aufgenommenen Last mittels wenigstens eines Druckaufnehmers und wenigstens eines der jeweiligen Stellung des Schaufelarms oder Auslegers (4) entsprechenden Winkels mittels wenigstens eines Winkelgebers zu jeweils in einem zeitlichen Meßintervall verteilt angeordneten Zeitpunkten,
- eine Messung dynamischer Einflußgrößen mittels wenigstens eines weiteren Meßwertgebers (16, 17, 20), wie der jeweiligen Rotationsgeschwindigkeit des Hubfahrzeuges/oder einzelnen Hubfahrzeugteilen, der jeweils wirksamen Reibungskraft und der jeweils zu Beginn eines Fördervorgangs zu überwindenden Beharrungsmomente sowie etwaiger Veränderungen des jeweils wirksamen Hebelarms,
- eine Kompensation der im Wege der Messung gewonnenen Daten um die dynamischen Einflußgrößen,
- eine Auswertung der durch die Kompensation bereinigten Meßwerte unter Berücksichtigung der Parametrierung und Kalibrierung.

2. Wägeverfahren nach Anspruch 1, dadurch gekennzeichnet, daß während der Parametrisierung die Abmessungen des Schaufelarmes oder des Auslegers (4) mit angelenktem Schaufelarm (5) und die relative Anordnung der Umlenkpunkte des Auslegers (4) oder des Schaufelarms (5) zueinander und/oder relativ zu dem zu bestimmenden Fußpunkt erfaßt und zur Weiterverarbeitung eingegeben und abgespeichert werden.

3. Wägeverfahren nach Ansprüche 1 oder 2, dadurch gekennzeichnet, daß zur Kslibrierung Leerfahrten des Hubfahrzeuges ohne Förderlast mit jeweils unterschiedlichen Rotetionsgeschwindigkeiten ausgeführt und dabei entsprechende Eigenlastkurven aufgezeichnet und abgespeichert werden.

4. Wägeverfahren nach einem der vorhergehenden Ansprüche, dadurch gekennzeichnet, daß zur Kompensation ein etwaig durch ein Beharrungsmoment der zu bewegenden Last verursachter Laststoß und weitere Meßwerte, die ein vorgebbares Toleranzband verlassen, ignoriert werden, daß die aktuelle Rotationsgeschwindigkeit des Hubfahrzeuges (1) und/oder einzelner Teile des Hubfahrzeuges (1) und die momentan wirkenden Reibungekräfte erfaßt und hiermit Jeweils ein Fliehkraft- und ein Reibungakraftanteil an der zu bestimmenden Förderlast ermittelt und von den jeweiligen Lastmeßwerten subtrahiert werden.

5. Wägeverfahren nach einem der vorhergehenden Ansprüche, dadurch gekennzeichnet, daß die Messung inkremental durch die Aufnahme einer von der Länge des zeitlichen Meßintervalls abhängigen Anzahl von Meßpunkten erfolgt.

6. Wägeverfahren nach Anspruch 5, dadurch gekennzeichnet, daß während der Messung für jeden Meßpunkt die jeweilige Stellung des Schaufelarmes oder des Auslegers (4) mit angelenktem Schaufelarm (5) sowie die in dem zu bestimmenden Fußpunkt jeweils wirkende Gesamtkraft erfaßt wird,

7. Wägeverfahren nach Anspruch 4 bis 6, dadurch gekennzeichnet, daß während der Auswertung die für jeden Maßpunkt aufgenommenen Meßwerte durch die Kompensation bereinigt sowie über das zeitliche Meßintervall integriert werden und durch Mittelwertbildung ein der jeweiligen Förderlast eines jeden Fördervorganges entsprechender Lastwert bestimmt wird.

8. Hubfahrzeug zur Durchführung eines Verfahrens nach Anspruch 1, insbesondere ein Großbagger, mit einem rotierbaren Oberteil (3) und einem Schaufelarm mit einer beweglichen Schaufel oder einem Ausleger (4) mit angelenktem Schaufelarm (5) mit beweglicher Schaufel (6) und wenigstens zwei jeweils in den Umlenkpunkten des Schaufelarms oder des Auslegers (4) mit angelenktem Schaufelarm (5) angeordneten Winkelgebern (14, 15) und wenigstens einem an mindestens einem Druckzylinder (10) des Schaufelarms (5) oder Auslegers (4) angeordneten Druckmesser (12, 13) und wenigstens einem weiteren Meßwertaufnehmer (16, 17 oder 20) zur Erfassung dynamischer Einflußgrößen, wobei die Meßwertaufnehmer (12, 13, 14, 15, 16, 17, 20) jeweils mit einer Steuereinrichtung (22) verbunden sind, die eine Eingabeeinheit zur Parametrierung des Hubfahrzeugs, sowie eine Speichereinheit zur Speicherung der bei der Kalibrierung des Hubfahrzeugs erfaßten Daten sowie zur Zwischenspeicherung der im Wege der Messung gewonnenen Meßdaten sowie ein Controller zur Durchführung einer Kompensation der Meßdaten um die dynamischen Einflußgrößen und zur Auswertung der durch die Kompensation bereinigten Meßwerte unter Berücksichtigung der Parametrierung und Kalibrierung umfaßt.

9. Hubfahrzeug nach Anspruch 8, dadurch gekennzeichnet, daß auf dem Oberteil (3) des Hubfahrzeuges (1) ein mit der Steuereinheit (22) in Signalverbindung stehender Beschleunigungsmesser (17) zur Erfassung der momentanen Rotationsbeschleunigung und Berechnung der jeweiligen Rotationsgeschwindigkeit angeordnet ist.

10. Hubfahrzeug nach Anspruch B oder 9, dadurch gekennzeichnet, daß unmittelbar an der beweglichen Schaufel (6) ein weiterer Winkelgeber (15) angeordnet ist.

11. Hubfahrzeug nach einem der Ansprüche 8 bis 10, dadurch gekennzeichnet, daß eine Erfassungseinrichtung (20) für den jeweiligen Neigungswinkel des Oberteils (3) gegenüber der Horizontalen mit dem Oberteil (3) verbunden und an die Steuereinrichtung (22) angeschlossen ist.

## Claims

1. Weighing method for determining the respective conveying load of a lifting vehicle (1), especially a heavy excavator, with a bucket jib or an arm with an articulated bucket jib (5), in which the following steps are carried out in succession:
- a parameterisation in which the geometry of the lifting vehicle (1) is detected and stored in such a manner that a characteristic field corresponding with the length of a lever arm which is effective each time relative to a foot point to be ascertained is determined,
- a calibration in which by means of appropriate empty travels the respective intrinsic proportion of the lifting vehicle (1) at the respective conveyed load finally to be determined Is detected,
- a measurement of at least the load, which was respectively picked up by the vehicle, by means of a pressure detector and of at least an angle, which corresponds with the respective setting of the bucket jib or arm (4), by means of at least one angle transmitter at respective time instants distributed in a measurement time interval,
- a measurement of dynamic Influencing magnitudes by means of at least one further measurement value transmitter (16, 17, 20), such as the respective rotational speed of the lifting vehicle and/or of individual lifting vehicle parts, the respectively effective friction force, the respective moment of inertia to be overcome at the start of a conveying process and possible changes in the respectively effective lever arm,
- a compensation of the data, which has been obtained in the course of the measuring, by dynamic influencing magnitudes and
- an evaluation of the measurement values, which are cleaned-up by the compensation, with consideration of the parameterisation and the calibration.

2. Weighing method according to claim 1, characterised in that during the parameterisation the dimensions of the bucket jib or the arm (4) with articulated bucket jib (5) and the relative arrangement of the deflection points of the arm (4) or of the bucket jib (5) relative to one another or relative to the foot point to be ascertained are detected, input for further processing and stored.

3. Weighing method according to claim 1 or 2, characterised in that for the calibration empty travels of the lifting vehicle without conveying load are carried out at respectively different speeds of rotation and in that case intrinsic load curves are recorded and stored.

4. Weighing method according to one of the preceding claims, characterised in that for the compensation a possible load jolt caused by a moment of Inertia of the load to be moved and further measurement values which depart from a predeterminable tolerance range are disregarded, and that the actual speed of rotation of the lifting vehicle (1) and/or individual parts of the lifting vehicle (1) and the instantaneous friction forces are detected and a centrifugal force component and a friction force component of the conveyed load to be determined are thereby respectively ascertained and subtracted from the respective load measurement values.

5. Weighing method according to one of the preceding claims, characterised in that the measurement is carried out incrementally by the recording of a number of measurement points dependent on the length of the measurement time interval.

6. Weighing method according to claim 5, characterised in that during the measurement the respective setting of the bucket jib or of the arm (4) with articulated bucket jib (5) as well as the overall force respectively acting at the foot point to be ascertained are detected for each measurement point.

7. Weighing method according to claim 4 to 6, characterised in that during the evaluation the measurement values recorded for each measurement point are cleaned-up by the compensation and are integrated over the measurement time interval and a load value corresponding to the respective conveyed load of each conveying process is determined by mean value formation.

8. Lift vehicle for carrying out a method according to claim 1, especially a heavy excavator, with a rotatable upper part (3) and a bucket jib with a movable bucket or an arm (4) with articulated bucket jib (5) with movable bucket (6) and at least two angle transmitters (14, 15) respectively arranged in the deflection points of the bucket jib or of the arm (4) with articulated bucket jib (5) and at least one pressure gauge (12, 13) arranged at at least one pressure cylinder (10) of the bucket jib (5) or arm (4) and at least one further measured value detector (16, 17 or 20) for detection of dynamic influencing magnitudes, wherein the measured value detectors (12, 13, 14, 15, 16, 17, 20) are each connected with a control device (22) which comprises an input unit for the parameterisation of the lifting vehicle, a storage unit for storage of the data detected during calibration of the lifting vehicle and for intermediate storage of the measurement data obtained in the course of the measuring, and a controller for carrying out a compensation of the measurement data by the dynamic influencing magnitudes and for evaluation of the measurement values cleaned up by the compensation with consideration of the parameterisation and calibration.

9. Lifting vehicle according to claim 8, characterised in that an acceleratlon meter (17), which is connected with the control unit (22) In terms of signal, for detection of the instantaneous rotational acceleration and calculation of the respective speed of rotation is arranged on the upper part (3) of the lifting vehicle.

10. Lifting vehicle according to claim 8 or 9, characterised in that a further angle transmitter (15) is arranged directly at the movable shovel (6).

11. Lifting vehicle according to one of claims 8 to 10, characterised in that a detecting device (20) for the respective angle of inclination of the upper part (3) relative to the horizontal is connected with the upper part (3) and coupled to the control device (22).

## Revendications

1. Procédé de pesage pour déterminer la charge de transport respective d'un véhicule de levage (1), notamment d'une grande pelle mécanique, avec un bras collecteur ou une flèche avec un bras collecteur articulé (5), où les étapes suivantes sont parcourues les unes après les autres :
- un paramétrage lors duquel la géométrie du véhicule de levage (1) est détectée et stockée de façon à déterminer un champ de lignes caractéristiques correspondant à la longueur d'un bras de levier qui est actif respectivement par rapport à une base à déterminer,
- un calibrage lors duquel est détectée au moyen de déplacements à vide correspondants la part propre respective du véhicule de levage (1) à la charge de transport respective à définir en fin de compte,
- une mesure au moins de la charge respectivement soulevée par le véhicule de levage au moyen d'au moins un capteur de pression et au moins d'un angle correspondant à la position respective du bras collecteur ou de la flèche (4) au moyen d'au moins un capteur d'angle respectivement à des instants répartis dans un intervalle de mesure temporaire,
- une mesure de grandeurs d'influence dynamiques au moyen d'au moins un autre capteur de valeurs de mesure (16, 17, 20), comme de la vitesse de rotation respective du véhicule de levage ou de parties individuelles du véhicule de levage, de la force de frottement respectivement active et des couples d'inertie à surmonter respectivement au début d'une opération de transport ainsi que d'éventuelles modifications du bras de levier respectivement actif,
- une compensation des données obtenues au cours de la mesure par les grandeurs d'influence dynamiques,
- une évaluation des valeurs de mesure corrigées par la compensation en tenant compte du paramétrage et du calibrage.

2. Procédé de pesage selon la revendication 1,
caractérisé en ce que pendant le paramétrage, les dimensions du bras collecteur ou de la flèche (4) à Laquelle est articulé le bras collecteur (5) et l'agencement relatif des points de renvoi de la flèche (4) ou du bras collecteur (5) les uns relativement aux autres et/ou relativement a la base à déterminer sont détectés et sont entrés et stockés en vue d'un traitement ultérieur.

3. Procédé de pesage selon les revendications 1 ou 2,
caractérisé en ce que pour le calibrage, des déplacements à vide du véhicule de levage sans charge de transport sont exécutés selon des vitesses de rotation respectivement différentes et, ce faisant, des courbes de charge propre correspondantes sont enregistrées et stockées.

4. Procédé de pesage selon l'une des revendications précédentes, caractérisé en ce que pour la compensation, une poussée de charge éventuelle provoquée par un couple d'inertie de la charge à déplacer et d'autres valeurs de mesure sortant d'une bande de tolérances pouvant être prédéterminée, sont ignorées, que la vitesse de rotation actuelle du véhicule de levage (1) et/ou de parties individuelles du véhicule de levage (1) et les forces de frottement actuellement agissantes sont détectées et qu'il est déterminé à partir de celles-ci respectivement un part de force centrifuge et de force de frottement à la charge de transport à déterminer et qui sont soustraites des valeurs de mesure de charge respectives.

5. Procédé de pesage selon l'une des revendications précédentes, caractérisé en ce que la mesure a lieu d'une manière incrémentielle par l'enregistrement d'un nombre de points de mesure dépendant de la longueur de l'intervalle de mesure temporaire.

6. Procédé de pesage selon la revendication 5,
caractérisé en ce que pendant la mesure, il est détecté pour chaque point de mesure la position respective du bras collecteur ou de la flèche (4) à laquelle est articulé le bras collecteur (5) ainsi que la force totale agissant respectivement dans la base à déterminer.

7. Procédé de pesage selon les revendications 4 à 6,
caractérisé en ce que pendant l'évaluation, les valeurs de mesure enregistrées pour chaque point de mesure sont corrigées par la compensation et sont intégrées sur l'intervalle de mesure temporaire, et qu'il est déterminé par la formation d'une valeur moyenne une valeur de charge correspondant à la charge de transport respective de chaque opération de transport.

8. Véhicule de levage pour la mise en oeuvre d'un procédé selon la revendication 1, notamment une grande pelle mécanique, avec une partie supérieure tournante (3) et un bras collecteur avec une pelle mobile ou une flèche (4) à laquelle est articulé le bras collecteur (5) avec la pelle mobile (6), et au moins deux capteurs d'angle (14, 15) disposés respectivement dans les points de renvoi du bras collecteur ou de la flèche (4) à laquelle est articulé le bras collecteur (5), et au moins un capteur de pression (12, 13) disposé à au moins un vérin de pression (10) du bras collecteur (5) ou de la flèche (4), et au moins un capteur de valeurs de mesure additionnel (16, 17 ou 20) pour la détection de grandeurs d'influence dynamiques, où les capteurs de valeurs de mesure (12, 13, 14, 15, 16, 17, 20) sont reliés chacun à une installation de commande (22) qui comprend une unité d'entrée pour le paramétrage du véhicule de levage, ainsi qu'une unité de stockage pour le stockage des données détectées lors du calibrage du véhicule de levage ainsi que pour, le stockage intermédiaire des données de mesure obtenues au cours de la mesure ainsi qu'un dispositif de commande pour l'exécution d'une compensation des données de mesure par les grandeurs d'influence dynamiques et pour l'évaluation des valeurs de mesure corrigées par la compensation, en tenant compte du paramétrage et du calibrage.

9. Véhicule de levage selon la revendication 8,
caractérisé en ce qu'il est disposé sur la partie supérieure (3) du véhicule de levage (1) un capteur d'accélération (17) en liaison de signalisation avec l'unité de commande (22) en vue de la détection de l'accélération momentanée de la rotation et pour le calcul de la vitesse de rotation respective.

10. Véhicule de levage selon la revendication 8 ou 9,
caractérisé en ce qu'il est disposé un capteur d'angle supplémentaire (15) directement à la pelle mobile (6).

11. , Véhicule de levage selon l'une des revendications 8 à 10, caractérisé en ce qu'une installation de détection (20) de l'angle d'inclinaison respectif de la partie supérieure (3) par rapport à l'horizontale est reliée à la partie supérieure (3) et est raccordée à l'installation de commande (22).
